Europäisches Patentamt

European Patent Office

Office européen des brevets

(19)

(11) Numéro de publication : **0 082 091**
**B1**

(12) **FASCICULE DE BREVET EUROPÉEN**

(45) Date de publication du fascicule du brevet :
**18.09.85**

(21) Numéro de dépôt : **82420163.6**

(22) Date de dépôt : **26.11.82**

(51) Int. Cl.⁴ : **F 27 D .17/00, C 21 C  5/52**

(54) Procédé et dispositif de récupération de gaz combustibles dans un four d'électrométallurgie.

(30) Priorité : **01.12.81 FR 8122881**

(43) Date de publication de la demande :
**22.06.83 Bulletin 83/25**

(45) Mention de la délivrance du brevet :
**18.09.85 Bulletin 85/38**

(84) Etats contractants désignés :
**DE GB IT**

(56) Documents cités :
**FR-A-   670 539**
**FR-A- 1 067 882**
**US-A- 2 606 016**
**US-A- 2 857 444**
**US-A- 3 163 520**
**US-A- 4 005 252**

(73) Titulaire : **PECHINEY ELECTROMETALLURGIE**
**Tour Manhattan La Défense 2-5, 6 place de l'Iris**
**F-92400 Courbevoie (FR)**

(72) Inventeur : **Herold, Robert**
**7, rue François Gex**
**F-74700 Sallanches (FR)**
Inventeur : **Dubrous, Francis**
**451, route du Fayet**
**F-74700 Sallanches (FR)**

(74) Mandataire : **Pascaud, Claude et al**
**PECHINEY 28, rue de Bonnel**
**F-69433 Lyon Cedex 3 (FR)**

Jouve, 18, rue St-Denis, 75001 Paris, France

## Description

La présente invention concerne un procédé et un dispositif pour la récupération de gaz combustibles et, plus particulièrement, du monoxyde de carbone, dans un four d'électrométallurgie.

De nombreux procédés d'élaboration électrothermique de métaux et alliages passent par un stade de réduction d'un composé oxydé par le carbone dans un four à arc électrique, avec production corrélative d'une quantité importante d'oxyde de carbone qui vient brûler à la partie supérieure de la charge. C'est le cas, notamment, de la fabrication du silicium, des alliages à base de silicium, de chrome, de manganèse, ainsi que dans la fabrication du carbure de calcium.

La nécessité d'économiser l'énergie dans ces fabrications, et aussi d'améliorer les conditions de travail dans l'environnement du four, ont conduit à l'idée de capter et de récupérer les gaz émis qui sont à température élevée et contiennent une proportion de monoxyde de carbone, variable selon les fabrications, mais généralement suffisante pour justifier et rentabiliser cette opération.

On a déjà tenté d'effectuer ce captage par fermeture intégrale du four, notamment pour la production de ferro-silicium. De tels dispositifs ont été décrits, entre autres, dans les brevets US. 3 213 178 (ELKEM), US. 3 165 520 (ELKEM), US. 3 615 346 et 3 679 806 (DEMAG), FR. 2 431 546 (JAPAN DETALS). Mais, cette fermeture intégrale entraîne des sujétions très contraignantes pour toutes les opérations de chargement des matières premières, de surveillance de la marche du four et de la descente et de la répartition de la charge, d'intervention sur les électrodes, et aussi pour la tenue de la voûte soumise à l'action directe des flammes.

Cette fermeture est souvent impraticable sur un four existant, et elle alourdit le devis de construction d'un nouveau four de façon souvent dissuasive.

Dans le brevet US. 4 005 252 (ELKEM), on décrit un dispositif de captage des gaz combustibles émis par un four ouvert, constitué par un corps annulaire disposé à la partie supérieure et à l'intérieur du four, d'une part, et par la cuve de ce dernier, d'autre part, les deux éléments mobiles l'un par rapport à l'autre étant reliés par un joint d'étanchéité. Le captage des gaz combustibles est effectué à la périphérie de la charge, par un dispositif situé à l'intérieur du four, constitué par une cloison étanche inclinée qui pénètre obligatoirement dans la charge jusqu'à une profondeur qui atteint habituellement le niveau des extrémités des électrodes. Des moyens hydrauliques permettent de faire tourner le dispositif par raport à la cuve. Ce dispositf est relativement compliqué, et on peut se poser la question de sa fiabilité et de son efficacité, étant donné sa position par rapport à la charge et aux électrodes.

La présente invention se propose de résoudre par un nouveau moyen simple, efficace et fiable, le problème du captage des gaz combustibles.

Un premier objet de l'invention est un procédé de récupération de gaz combustibles dans un four d'électrométallurgie comportant une enveloppe métallique externe et un garnissage réfractaire interne dans lequel au moins un composé oxydé est réduit par du carbone, les différents constituants étant introduits sous forme d'une charge divisée qui descend progressivement vers la zone de réaction en passant par une zone de frittage, procédé selon lequel on capte, par aspiration à la périphérie de la charge, des gaz combustibles produits dans la zone de réaction, par une pluralité d'orifices ménagés dans l'enveloppe métallique externe et le garnissage réfractaire interne, et disposés à un niveau correspondant à la partie inférieure de la charge avant son entrée dans la zone de frittage.

Un autre objet de l'invention est un dispositif pour la mise en œuvre du procédé de récupération de gaz combustibles, comportant une enveloppe métallique externe, un garnissage réfractaire interne et une pluralité d'orifices ménagés dans l'enveloppe métallique externe et le garnissage réfractaire interne, chaque orifice étant relié à une canalisation qui débouche à l'extérieur de l'enveloppe métallique externe et qui est connectée à un moyen d'aspiration des gaz.

L'invention a été spécialement réalisée pour des fours entièrement ouverts, mais on verra que rien ne s'oppose à sa mise en œuvre dans des fours semi-fermés ou fermés.

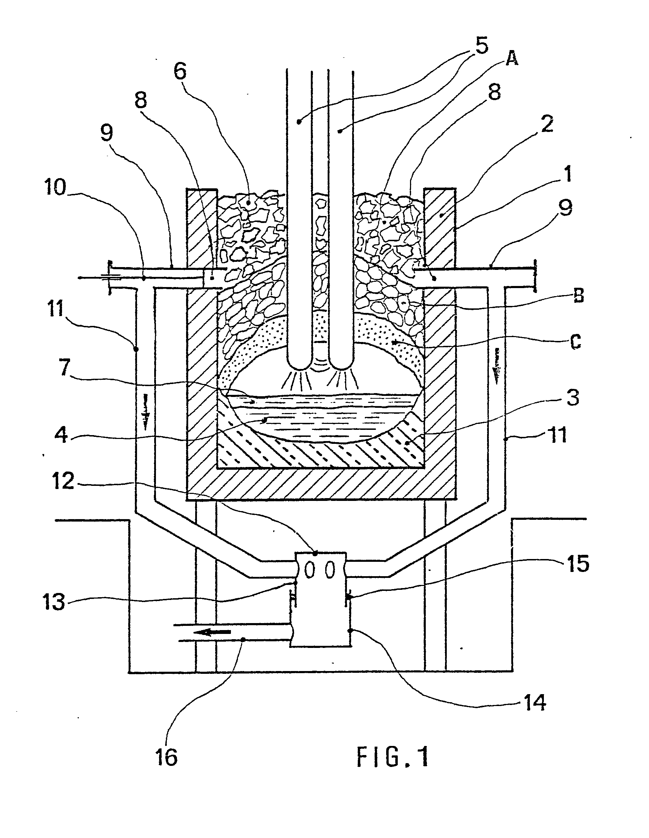

La figure 1 montre schématiquement, en coupe verticale, un four équipé du dispositif objet de l'invention.

Le four comporte une carcasse métallique externe (1), un garnissage réfractaire (2), complété, s'il y a lieu, selon le type de fabrication envisagée, par un garnissage carboné (3) dans la partie inférieure en contact avec le métal liquide (4).

Le trou et le bec de coulée n'ont pas été représentés. Le courant est amené par les électrodes (5), qui peuvent être en nombre quelconque selon le type de four.

En fonctionnement normal, la charge (6), qui est essentiellement formée d'un mélange de minerai oxydé, de réducteur carboné (charbon, minéral, charbon de bois, coke, bois, etc...) et, éventuellement, d'additions telles que de la chaux pour former un laitier avec les constituants du minerai, et des déchets ou du minerai de fer — si l'on fabrique un ferroalliage — comporte, du haut vers le bas, plusieurs zones :

1. la zone A, qui est la charge « froide », en cours de préchauffage, par la conduction thermique et, en l'absence de la mise en œuvre de l'invention, par la combustion, en surface, des gaz et, notamment, du monoxyde de carbone, produits par les réactions de réduction carbothermique dans la zone C.

2. la zone B, dans laquelle, en raison de la température croissante qui atteint et dépasse environ 1 000 à 1 200 °C, commence le « frittage » de la charge, du fait du ramollissement progressif de ses constituants les plus fusibles.

3. la zone C, qui est la zone de réaction proprement dite, directement soumise au rayonnement de l'arc, et dans laquelle se produisent l'essentiel des réactions conduisant au métal qui se rassemble en (4), surmonté, le cas échéant, d'une couche de laitier (7), et à la formation de l'oxyde de carbone.

La demanderesse a constaté qu'il était possible de collecter la plus grande partie des gaz de réaction en disposant, à la périphérie du four, une pluralité d'orifices débouchant dans la charge, et à un niveau qui se situe sensiblement à la transition entre les zones A et B et en procédant, par ces orifices, à une aspiration pour extraire ces gaz et les conduire jusqu'à des moyens de récupération et d'utilisation immédiate ou différée.

Les orifices de captage (8) peuvent déboucher au ras du garnissage ou être légèrement en retrait ou en saillie. Il est préférable de prévoir des moyens pour éviter que les constituants de la charge n'aient tendance à s'introduire dans les orifices de captage en jouant soit sur leur forme et leur orientation, soit sur la géométrie du garnissage réfractaire (2) dans la partie qui surmonte les orifices. Le nombre et la dimension des orifices (8) et la section transversale totale des orifices doivent être adaptés à la géométrie du four.

Un captage par un anneau continu, entourant le four, est concevable, mais il a l'inconvénient d'affaiblir la structure du four au niveau de cet anneau.

Dans une réalisation particulière, sur un four d'essai de 120 kW destiné à la production de silicium métal, on a prévu 12 orifices équidistants, à section rectangulaire de 140 × 60 mm, le grand côté étant horizontal, représentant 75 % de la surface interne du réfractaire à ce niveau.

Il est également préférable de disposer dans les canalisations (9) qui se raccordent aux orifices (8) des moyens tels que le ringard (10) pour décolmater éventuellement les orifices soit manuellement, soit de façon automatique en fonction d'un programme préétabli ou d'une mesure de débit ou de pression indiquant la nécessité de cette opération.

Les canalisations (9) sont reliées par un tube (11) à un collecteur central (12) situé dans l'axe du four. Cette disposition n'est pas obligatoire, mais elle présente le double avantage d'une perte de charge analogue sur les différents circuits aboutissant aux différents orifices, et d'une adaptation facile à un four animé d'une rotation autour de son axe, en constituant le collecteur (12) en deux parties, une supérieure (13), solidaire du four, et une partie inférieure fixe (14) avec, entre les deux, un joint tournant étanche (15), la partie fixe (14) étant reliée au moyen d'aspiration des gaz, non représenté.

Il est également possible de prévoir, sur les canalisations (9 ou 11) des moyens de réglage du débit d'aspiration, qui peuvent aller jusqu'à la fermeture totale et qui peuvent être asservis à plusieurs paramètres tels que le débit, la pression, la température, la teneur du gaz aspiré en un constituant donné.

La mise en marche de l'aspiration des gaz, dans le dispositif objet de l'invention, se traduit de façon visible par la diminution progressive des flammes à la partie supérieure de la charge.

Sur un four destiné à la production de silicium métal, les gaz captés avaient une composition située dans les limites suivantes :

CO : 90-95 %

$CO_2$ : 1-2 %

$N_2$ : 3-7 %

avec, en outre, de petites quantités d'oxygène, de méthane et homologues supérieurs, d'hydrogène et de vapeur d'eau.

Le taux de récupération du monoxyde de carbone, par rapport à la quantité théorique calculée est au moins égal à 60 % et atteint facilement 70 % et même plus.

Si l'on augmente l'aspiration, les flammes disparaissent totalement à la surface de la charge, mais l'analyse des gaz montre que la proportion de CO a quelque peu diminué, et la proportion d'azote a augmenté, ce qui montre que l'on a aspiré, au travers de la charge, un peu d'air extérieur.

Il y a donc, en fonction de l'épaisseur de la charge et de sa perméabilité, un niveau d'aspiration optimal que l'homme de l'art déterminera aisément, par exemple en mesurant le débit d'aspiration et la teneur en CO et $N_2$ des gaz aspirés.

Le gaz combustible ainsi récupéré peut être utilisé par tout procédé connu, de façon immédiate ou différée, et, en particulier :

— Pour préchauffer ou préréduire les constituants de la charge avant leur introduction dans le four.

— Pour effectuer diverses opérations métallurgiques faisant appel à un gaz réducteur.

— Pour produire, dans une chaudière, de la vapeur capable d'entraîner une génératrice électrique.

— Pour alimenter une turbine à gaz couplée à une génératrice électrique.

La mise en œuvre de l'invention procure un certain nombre d'avantages :

1. Dans la conception du four :

En dehors de l'adjonction des orifices de captage et des canalisations, le four n'est pas modifié et l'invention peut être mise en œuvre sur des fours existants au prix de modifications relativement mineures.

2. Dans la conduite du four :

L'aspiration des gaz abaisse la température superficielle du four. Du fait que le CO et les produits volatils combustibles ne brûlent plus en surface, on réduit fortement le rayonnement, d'où résultent une amélioration importante des conditions de travail et une plus grande longévité des équipements (porte-électrodes, engins de service). En outre, la charge a moins tendance à coller et descend plus régulièrement.

S'y ajoutent tous les avantages classiques des fours ouverts : facilité de piquage, d'égalisation de la charge qui est amenée localement par une trémie de chargement, de récupération des mégots d'électrodes et contrôle visuel permanent auquel le personnel d'exploitation reste très attaché, et que l'on n'a plus dans les fours fermés.

La marche du four n'est pas perturbée par le captage des gaz combustibles.

3. Dans la récupération d'énergie :

Par combustion de ce gaz, et, selon le type de fabrication, on peut récupérer :
— soit sous forme thermique, au moins 60 % (et plus) de l'énergie électrique injectée,
— soit sous forme électrique jusqu'à 20 % de cette même énergie.

Les gaz captés sont relativement propres et peu chargés en poussière. Leur température est relativement basse [100 à 200° dans le collecteur (12)], contrairement à ce qui se passe dans les fours semi-fermés dans lesquels les gaz de combustion sortent à température élevée ce qui implique des installations de dépoussiérage capables de résister à cette température, et une inséparabilité des fonctions de « dépoussiérage » et « récupération de chaleur », ce qui est très gênant si l'une d'elles est sujette à une panne.

Il importe, cependant, de souligner que l'invention pourrait également s'appliquer à des fours fermés ou semi-fermés, sans les inconvénients que l'on vient de signaler, en particulier, du fait de la faible température de la partie supérieure de la charge (ce qui règle le problème de tenue de la voûte), et que les gaz sont collectés avant combustion, donc à température relativement basse.

## Revendications

1. Procédé de récupération de gaz combustibles dans un four d'électrométallurgie comportant une enveloppe métallique externe et un garnissage réfractaire interne dans lequel au moins un composé oxydé est réduit par du carbone, les différents constituants étant introduits dans le four sous forme d'une charge divisée qui descend progressivement vers la zone de réaction en traversant une zone de frittage, procédé selon lequel les gaz combustibles sont captés par aspiration à la périphérie de la charge, caractérisé en ce que l'aspiration est effectuée par une pluralité d'orifices ménagés dans l'enveloppe métallique externe et le garnissage réfractaire interne, disposés à un niveau correspondant à la partie inférieure de la charge divisée et avant son entrée dans la zone de frittage.

2. Procédé selon la revendication 1, caractérisé en ce que l'aspiration des gaz collectés par chaque orifice est asservie à au moins un des paramètres : température, pression et débit des gaz, concentration des gaz en monooxyde de carbone, en azote, ou autre constituant.

3. Procédé selon revendication 1 ou 2, caractérisé en ce que les gaz collectés à chaque orifice sont conduits à un collecteur central et dirigés à volonté vers un moyen de stockage pour utilisation différée, ou vers un moyen d'utilisation immédiate.

4. Dispositif pour la mise en œuvre du procédé selon l'une quelconque des revendications 1 à 3, de récupération de gaz combustible dans un four d'électrométallurgie comportant une enveloppe métallique externe et un garnissage réfractaire interne, et dans lequel au moins un composé oxydé est réduit par du carbone, les différents constituants étant introduits dans le four sous forme d'une charge divisée, caractérisé en ce qu'il comporte une pluralité d'orifices (8), mélangés dans l'enveloppe métallique externe (1) et le garnissage réfractaire interne (2), disposés à un niveau correspondant à la partie inférieure de la charge divisée avant son entrée dans la zone de frittage, chaque orifice étant relié à une canalisation (9) qui débouche à l'extérieur de l'enveloppe métallique (1) externe et qui est connectée à des moyens d'aspiration et à des moyens d'utilisation immédiate ou différée des gaz combustibles.

5. Dispositif selon revendication 4, caractérisé en ce que chaque canalisation (9) est munie d'un moyen (10) de décolmatage de l'orifice (8) correspondant.

6. Dispositif selon l'une des revendications 4 ou 5, caractérisé en ce que chaque canalisation (9) est reliée par un tube (11) à un collecteur (12).

7. Dispositif selon revendication 6, caractérisé en ce que le collecteur (12) est disposé dans l'axe vertical du four et en ce que les canalisations (9) et les tubes (11) offrent, au passage des gaz, une perte de charge sensiblement égale.

8. Dispositif selon revendication 6 ou 7, caractérisé en ce que le collecteur (12) est en deux parties (13, 15) reliées par un joint tournant (14) dans le cas où la cuve du four tourne autour de son axe.

9. Dispositif selon l'une quelconque des revendications 4 à 7, caractérisé en ce que chaque canalisation (9) ou chaque tube (11) possède un moyen individuel de réglage du débit de gaz collectés.

10. Dispositif selon revendication 9, caractérisé en ce que les moyens de réglage du débit de gaz collectés sont connectés à un moyen d'asservissement à au moins un des paramètres : température, pression et débit des gaz, concentration en monooxyde de carbone, en azote, ou autre constituant.

## Claims

1. A process for the recovery of combustible gases in an electrometallurgy furnace comprising an external metal casing and an internal refractory lining in which at least one oxidised compound is reduced by means of carbon, the different constituents being introduced into the furnace in the form of a divided charge which moves progressively downwardly towards the reaction region, passing through a sintering region, in which process the combustible gases are collected by suction at the periphery of the charge, characterised in that the suction operation is effected by way of a plurality of openings which are provided in the external metal casing and the internal refractory lining and which are disposed at a level corresponding to the lower portion of the divided charge and before it passes into the sintering region.

2. A process according to claim 1 characterised in that the suction operation in respect of the gases collected through each opening is controlled in dependence on at least one of the following parameters : temperature, gas pressure and flow rate, and the level of concentration in the gases of carbon monoxide, nitrogen or other constituent.

3. A process according to claim 1 or claim 2 characterised in that the gases collected at each opening are passed to a central collector and directed as desired towards a storage means for deferred use thereof or towards a means for immediate use thereof.

4. Apparatus for carrying out the process according to any one of claims 1 to 3 for the recovery of combustible gas in an electrometallurgy furnace comprising an external metal casing and an internal refractory lining and in which at least one oxidised compound is reduced by means of carbon, the different constituents being introduced into the furnace in the form of a divided charge, characterised in that it comprises a plurality of openings (8) which are provided in the external metal casing (1) and the internal refractory lining (2) and which are disposed at a level corresponding to the lower portion of the divided charge before it passes into the sintering region, each opening being connected to a conduit (9) which opens to the exterior of the external metal casing (1) and which is connected to suction means and to means for the immediate or deferred use of the combustible gases.

5. Apparatus according to claim 4 characterised in that each conduit (9) is provided with a means (10) for unblocking the corresponding opening (8).

6. Apparatus according to one of claims 4 or 5 characterised in that each conduit (9) is connected by a tube (11) to a collector (12).

7. Apparatus according to claim 6 characterised in that the collector (12) is disposed on the vertical axis of the furnace and that the conduits (9) and the tubes (11) produce a substantially equal pressure drop in the flow of the gases.

8. Apparatus according to claim 6 or claim 7 characterised in that the collector (12) is in two parts (13, 15) which are connected by a rotary joint (14) in the case where the vessel of the furnace rotates about its axis.

9. Apparatus according to any one of claims 4 to 7 characterised in that each conduit (9) or each tube (11) has an individual means for regulating the flow rate of collected gases.

10. Apparatus according to claim 9 characterised in that the means for regulating the flow rate of the collected gases are connected to a means for control in dependence on at least one of the following parameters : temperature, gas pressure and flow rate and the level of concentration of carbon monoxide, nitrogen or other constituent.

**Patentansprüche**

1. Verfahren zur Rückgewinnung von brennbaren Gasen eines Elektroofens mit einer metallischen äußeren Hülle und einer feuerfesten inneren Auskleidung, in dem wenigstens ein oxidierter Bestandteil durch Kohlenstoff reduziert wird, wobei die verschiedenen Bestandteile in den Ofen in Form einer zerteilten Charge eingeführt werden, die unter Durchquerung einer Sinterzone allmählich in die Reaktionszone absteigt, nach welchem Verfahren die brennbaren Gase durch Ansaugen am Umfang der Charge aufgefangen werden, dadurch gekennzeichnet, daß das Ansaugen durch mehrere in der metallischen äußeren Hülle und in der feuerfesten inneren Auskleidung ausgebildete Öffnungen erfolgt, die in einer Höhe angeordnet sind, die dem Unterteil der zerteilten Charge vor deren Eintritt in die Sinterzone entspricht.

2. Verfahren nach Anspruch 1, dadurch gekennzeichnet, daß das Ansaugen der durch jede Öffnung gesammelten Gase durch wenigstens einen der folgenden Parameter geregelt wird : Temperatur, Druck, Gasdurchsatz und Gehalt der Gase an Kohlenmonoxid, Stickstoff une einem weiteren Bestandteil.

3. Verfahren nach Anspruch 1 oder 2, dadurch gekennzeichnet, daß die an jeder Öffnung gesammelten Gase zu einem zentralen Sammelbehälter geführt und nach Belieben zur späteren Verwendung zu einer Speichereinrichtung oder zu einer Einrichtung zur sofortigen Verwendung geleitet werden.

4. Vorrichtung zur Durchführung des Verfahrens nach einem der Ansprüche 1 bis 3 zur Rückgewinnung von brennbaren Gasen eines Elektroofens mit einer metallischen äußeren Hülle und einer feuerfesten inneren Auskleidung, in dem wenigstens ein oxidierter Bestandteil durch Kohlenstoff reduziert wird, wobei die verschiedenen Bestandteile in den Ofen in Form einer zerteilten Charge eingeführt werden, gekennzeichnet durch mehrere Öffnungen (8), die in der metallischen äußeren Hülle (1) und in der feuerfesten inneren Auskleidung (2) ausgebildet und in einer Höhe angeordnet sind, die dem unteren Beginn der zerteilten Charge vor deren Eintritt in die Sinterzone entspricht, wobei jede Öffnung mit einer Rohrleitung (9) verbunden ist, die außerhalb der metallischen äußeren Hülle (1) mündet und die mit einer Einrichtung zum Ansaugen und mit einer Einrichtung für den sofortigen oder späteren Gebrauch der brennbaren Gase verbunden ist.

5. Vorrichtung nach Anspruch 4, dadurch gekennzeichnet, daß jede Rohrleitung (9) mit einer Einrichtung (10) zum Reinigen der entsprechenden Öffnung (8) verbunden ist.

6. Vorrichtung nach einem der Ansprüche 4 oder 5, dadurch gekennzeichnet, daß die Rohrleitung (9) über ein Rohr (11) mit einem Sammelbehälter (12) verbunden ist.

7. Vorrichtung nach einem der Ansprüche 4 oder 5, dadurch gekennzeichnet, daß der Sammelbehälter (12) auf der senkrechten Achse des Ofens angeordnet ist und daß die Rohrleitungen (9) sowie die Rohre (11) beim Durchtritt der Gase einen im wesentlichen gleichgroßen Druckabfall aufweisen.

8. Vorrichtung nach Anspruch 6 oder 7, dadurch gekennzeichnet, daß der Sammelbehälter (12) aus zwei Teilen (13, 15) besteht, die durch ein Drehgelenk (14) für den Fall verbunden sind, daß sich der Schacht des ofens um seine Achse dreht.

9. Vorrichtung nach einem der Ansprüche 4 bis 7, dadurch gekennzeichnet, daß jede Rohrleitung (9) oder jedes Rohr (11) eine eigene Einrichtung zur Einstellung des Durchsatzes an gesammelten Gasen aufweist.

10. Vorrichtung nach Anspruch 9, dadurch gekennzeichnet, daß die Einrichtung zur Einstellung des Durchsatzes an verbrannten Gasen mit einer Einrichtung zur Regelung in Abhängigkeit von wenigstens einem der folgenden Parameter verbunden ist : Temperatur, Druck, Durchsatz der Gase und Konzentration an Kohlenmonoxid, Stickstoff oder einem weiteren Bestandteil.

FIG.1